# EUROPEAN PATENT APPLICATION

(11) **EP 4 529 250 A1**
(43) Date of publication of application: **26.03.2025**
(21) Application number: 23198886.6
(22) Date of filing: 21.09.2023
(51) Int. Cl.: H04W 12/08, G07C 9/00

(54) **METHOD FOR UPDATING CONFIGURATION PARAMETERS OF AN ACCESS CONTROL DEVICE**

(71) Applicant: dormakaba Schweiz AG, 8623 Wetzikon (CH)
(72) Inventor: MUELLER, Markus, 8153 Rümlang (CH)
(74) Representative: Balder IP Law, S.L.

(57) **Abstract**

According to a first aspect of the present invention, there is proposed a computer-implemented method for updating configuration parameters, in particular whitelists and/or blacklists, of an access control device. The method may comprise receiving, by a mobile device, a set of configuration parameters from a server, the set of configuration parameters jointly establishing an update of current configuration parameters on the access control device. The method may comprise determining, by the mobile device, that a wireless connection with the access control device is established. The method may comprise determining a subset of configuration parameters from the set of configuration parameters to be transferred to the access control device, wherein the subset of configuration parameters is a strict subset of the set of configuration parameters. The method may comprise sending, by the mobile device, the subset of configuration parameters to the access control device via the wireless connection. The method may comprise disconnecting, by the mobile device, the wireless connection with the access control device after the subset of configuration parameters have been sent.

## Description

### TECHNICAL FIELD

The present invention relates generally to the field of computer-implemented methods for updating configuration parameters. More specifically, it relates to updating whitelists and/or blacklists of an access control device using a mobile device via a wireless connection.

### BACKGROUND ART

The proliferation of digital access control devices and related security systems is rising in the modern age as part of a broader trend towards digitization and network-based security. These access control devices have the capacity to allow or deny the usage of a physical or technical resource, thanks primarily to a system of grant permissions, often managed by a security system.

In this context, whitelists and blacklists embody a key security mechanism, permitting or denying access to specific system components based upon an identified individual, device and/or service. Despite this, maintaining these lists has consistently represented a complex and time-consuming challenge. These lists may need to be updated repeatedly, often in real-time, according to changing requirements, and any delay or error in update operations can potentially result in security lapses.

Further, these lists may need to be updated in a secure way. In particular, security considerations in updating whitelists and blacklists are crucial as they form a core component of control mechanisms used in access control devices. The inclusion of an unauthorized credential and/or token in the whitelist or a failure to update the blacklist with known rogue credentials and/or tokens can potentially cause unauthorized access or denial of access to authorized entities, posing a significant security risk. Therefore, ensuring the secure transmission of configurations parameters is essential.

Given the sensitive nature of the data involved, it is imperative that the communication happens over a secure wireless connection. Ensuring this not only helps in preventing eavesdropping and tampering of the transferred data but also lends additional assurance on data integrity. The danger associated with malware thus cannot be overstated. If a whitelist or blacklist is infected with malware, it can facilitate unauthorized access, disrupt system operations, and even damage the entire security system.

Therefore, there is a need to further develop update processes in order to enhance security. Therefore, it is an object of the present invention, to provide a method that is more secure while transmitting configuration parameters, such as whitelists and/or blacklists to an access control device.

### SUMMARY OF INVENTION

The problem is solved by the subject-matter defined in the independent claims. Advantageous modifications of embodiments of the invention are defined in the dependent claims as well as in the description and the figures.

According to a first aspect of the present invention, there is proposed a computer-implemented method for updating configuration parameters, in particular whitelists and/or blacklists, of an access control device. The method may comprise receiving, by a mobile device, a set of configuration parameters from a server, the set of configuration parameters jointly establishing an update of current configuration parameters on the access control device. The method may comprise determining, by the mobile device, that a wireless connection with the access control device is established. The method may comprise determining a subset of configuration parameters from the set of configuration parameters to be transferred to the access control device, wherein the subset of configuration parameters is a strict subset of the set of configuration parameters. The method may comprise sending, by the mobile device, the subset of configuration parameters to the access control device via the wireless connection. The method may comprise disconnecting, by the mobile device, the wireless connection with the access control device after the subset of configuration parameters have been sent. In subsequent sections, the preferred embodiments and advantages of this invention will be described in greater detail.

The step of determining a subset of configuration parameters from the set of configuration parameters to be transferred to the access control device may be performed either by the mobile device or by the server.

This computer-implemented method ensures secure transfer of configuration parameters between a server and an access control device over a wireless connection. This wireless connection could be based on a number of protocols, such as WLAN, Zigbee, Bluetooth, UWB, depending on the necessity and compatibility. The primary advantage of this aspect is the mitigation of possible security risks due to erroneous or illegal access, thanks to the set configuration parameters being split into several subsets of configuration parameters which are strict subsets of the set of configuration parameters. By this, each subset is transferred separately, and any unauthorized configuration is made much more difficult because multiple operations and/or multiple mobile devices would be involved. Further, an inbuilt mechanism to disconnect the wireless connection once the required subset of configuration parameters has been transferred, enhances the security on the one hand and reduces the need for bandwidth resources on the user's mobile devices. Thus, the the load on the user's mobile devices is minimized.

The term "mobile device" in the context of this invention is broadly understood as a portable computing instrument involving various types of handheld devices used for digital interactions and computing tasks. Taking a more specific approach, this could include devices like smartphones, tablet computers, wearable computing devices, and so on. In this invention, the mobile device functions as the principal hub that initiates, sustains, and terminates the wireless connection between the server and the access control device and sends configuration parameters to the access control device.

A "server," in the broadest sense, refers to a computer program or device that provides functionality for other programs or devices, known as "clients." More specifically, a server can be an entity in a networked environment that responds to requests across a computer network to provide, or help provide, a network service. In this context, the server may store the configuration parameters for the access control device and send these parameters to the mobile device upon request.

An "access control device" is generally understood to be an electronic device or system employed to regulate access to a network or physical location. More specifically, it could be an electronic door lock, card reader, biometric access system, or any other device that controls access based on a certain set of rules. For this patent aspect, the access control device receives configuration parameters sent by the mobile device.

It may be provided that at least one of the subsets of the configuration parameters is sent from the server directly to the access control device in order to further enhance the security of the method.

The "wireless connection between mobile device and server" fundamentally refers to the transfer and exchange of data between the mobile device and the server without the use of wires. In a strict context, it may involve the utilization of radio waves, infrared, satellite, or other forms of wireless technology protocols like WLAN (Wi-Fi), GSM, 3G, 4G, 5G, etc. The purpose of this connection in the described method is to allow the mobile device to receive configuration parameters from the server.

The "wireless connection between mobile device and access control device" is the link established wirelessly for data exchange between the mobile device and the access control device. This connection employs the same principles as the one between the mobile device and the server, but with a different function - delivering the selected configuration parameters from the mobile device to the access control device. Most preferred communication protocols are Bluetooth, Bluetooth Low Energy, Ultra-Wideband, Zigbee, WLAN, etc.

The term "set of configuration parameters of the access control device," defines a combined group of configuration values stored on the server. These values may determine parameters causing a specific behavior of the access control device. These configuration parameters could include access tokens, time settings, privilege rights, whitelist, blacklist, and many more specific to the operation of the access control device.

A "subset of configuration parameters of the access control device" describes the particular elements or values selected from the larger-combined set of configuration parameters. The term "strict subset," in the mathematical context, refers to a subset that is not equal to its superset. Specifically, in this case, a strict subset of configuration parameters means that not all configuration parameters stored on the server are sent to the access control device at one, only part.

It may be provided that the set of configuration parameters includes a time-dependent access control profile, preferably including closing days and/or opening days.

Particular advantages of this feature are:
Enhanced security: The time-dependent access control profile significantly strengthens the security of the system by allowing access only during specified times and days. By restricting access during 'off hours' or 'closing' days, the risk of unauthorized access can be substantially reduced.

Customization: Users can customize access controls based on their operational schedule, defining when their system or facility should be accessible.

Efficient Resource Utilization: By specifying 'opening' and 'closing' days, businesses can optimize their operational efficiency and resource usage.

Energy saving: In physical access controls, limiting access on certain days or times could lead to energy saving e.g., lights and air conditioning used only during 'opening' days.

It may be provided that the set of configuration parameters in the method includes a blacklist and/or a whitelist. In a preferred embodiment, the blacklist can comprise prohibited credentials and/or access tokens, while the whitelist may comprise allowed credentials and/or access tokens.

Providing a blacklist and/or whitelist via the set of configuration parameters further enhances the system's security. In this context, the blacklist could comprise items like unauthorized user credentials or denied access tokens, while the whitelist includes the permitted counterparts. This selective screening of authorized and unauthorized entities strengthens the system's security, reducing the vulnerability to potential security exploits or breaches.

It may be provided that the set of configuration parameters includes difference data of a blacklist and/or difference data of a whitelist that include amendments to a previous blacklist and/or whitelist of the access control device,
optionally wherein the difference data of the blacklist includes
further prohibited credentials and/or access tokens to be added on the previous blacklist of the access control device, and/or
delete-commands causing the access control device to delete credentials and/or access tokens from the previous blacklist of the access control device;
   optionally wherein the difference data of the whitelist includes
further whitelisted credentials and/or access tokens to be added on the previous whitelist of the access control device, and/or
delete-commands causing the access control device to delete credentials and/or access tokens from the previous whitelist of the access control device.

This features have the following advantages: Enhanced security management: This feature allows for efficient updates to blacklists and whitelists, thereby maintaining the security of the system or facility. The 'difference data' allows for dynamic control of access. Users can quickly and easily add or remove credentials and/or tokens as per evolving needs and circumstances. The system further features a higher degree of flexibility, accommodating both expansions and restrictions in access control. Rather than needing to recreate or overhaul the entire list, only the differences need to be processed, saving both time and computational resources.

Further, by keeping blacklists and whitelists up-to-date, the likelihood of unauthorized access can be substantially decreased. Since the edits are specific to the amendments (additions or deletions), it also reduces chances for human error, thus improving security.

It may be provided that the set of configuration parameters in the method includes a subset of configuration parameters featuring a blacklist and a different subset of configuration parameters featuring a whitelist.

Separating the set of configuration parameters into differentiated subsets, each having its own specific function (blacklist or whitelist), is advantageous. This segregation aids in efficient data management and also facilitates error-free operation of the system, enhancing ease of use and minimizing operational complications.

It may be provided that the step of determining the subset of configuration parameters in the method is performed by one or more of the following entities: the mobile device, the server, or the access control device.

Different entities (mobile device, server, access control device) may be involved in determining the subset of configuration parameters to be transferred. This enhances the flexibility of the method.

It may be provided that the access control device in the method provides a version of configuration parameters. The subset of configuration parameters is determined based on this provided version.

The use of version control for configuration parameters is an easy implementation of desired update routines. The primary advantage of this mechanism is that it enables easy tracking of changes, enhances system reliability, and facilitates easy recovery in case of any untoward incidents, thereby enhancing system resilience.

The method may comprise the further steps of the mobile device receiving unique identification information from the access control device, and optionally, the mobile device sending the unique identification information to the server. This not only adds an extra layer of security but also aids in maintaining stringent access control, enabling reliable and secure communication.

It may be provided that the wireless connection with the access control device in the method is limited to sending only one subset of configuration parameters.

By limiting the wireless connection to sending only one subset of configuration parameters, it helps in minimizing the bandwidth usage and potential unauthorized access, enhancing the system's overall efficiency and security.

It may be provided that the mobile device used in the method is a smartphone. The use of a mobile device, such as a smartphone, reduces the need for additional hardware and facilitates easy and flexible use.

It may be provided that the wireless connection in the method is based on one or more of the following: WLAN, particularly IEEE 802.11; Zigbee, particularly IEEE 802.15.4; Bluetooth, particularly Bluetooth Low Energy, particularly IEEE 802.15.1; UWB, particularly IEEE 802.15.4a and/or IEEE 802.15.4z.

Supporting several wireless protocols, makes the method compatible and adaptable to varying technical environments, thereby increasing the invention's scalability and flexibility.

It may be provided that the access control device used in the method is an electronic reader device and/or an electronic lock.

According to a second aspect of the present invention, a data processing apparatus may be provided, particularly a mobile device, more particularly a smartphone, which is configured to perform the method according to the first aspect of the present invention.

All technical implementation details and advantages described with respect to the first aspect of the present invention are self-evidently mutatis mutandis applicable for the second aspect of the present invention and vice versa.

According to a second aspect of the present invention, a computer program comprising computer program code may be provided which, when run on a data processing apparatus according to the second aspect of the present invention, causes the data processing apparatus to perform a method according to the first aspect of the present invention.

All technical implementation details and advantages described with respect to the first and/or second aspect of the present invention are self-evidently mutatis mutandis applicable for the third aspect of the present invention and vice versa.

### BRIEF DESCRIPTION OF THE DRAWINGS

The disclosure may be better understood by reference to the following drawings:
Fig. 1: A first schematic depiction illustrating a server, a mobile device and and access control device operating according to a method of embodiments of the present invention.
Fig. 2: A second schematic depiction illustrating a server, a mobile device and and access control device operating according to a method of embodiments of the present invention.
Fig. 3: A flow chart diagram including steps according to a method of embodiments of the present invention.

### DETAILED DESCRIPTION OF THE DRAWINGS

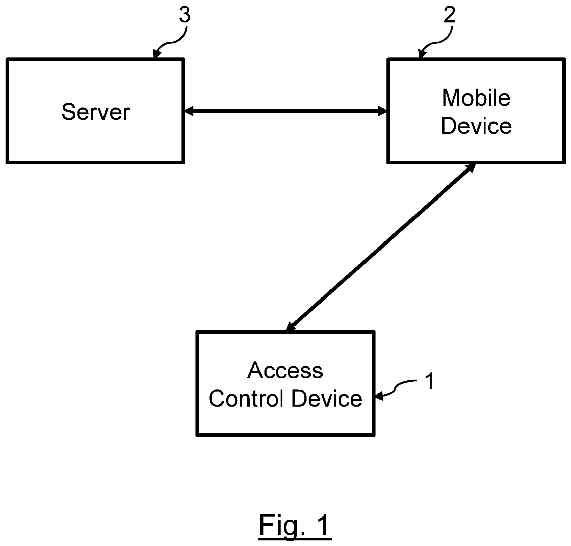

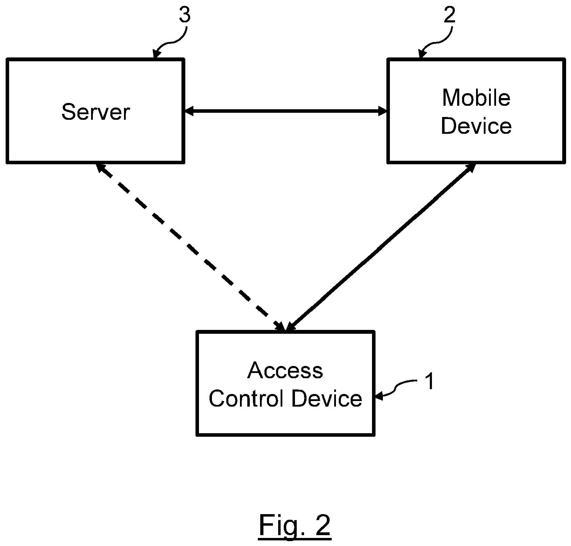

Figures 1 and 2 depict an access control device 1, a mobile device 2 and a server 3. In Figure 1, the server 3 communicates with the mobile device, and communication between the server 3 and the access control device 1 is possible vie the mobile device 2. In Figure 2, also a direct communication between the server 3 and the access control device 1 is possible.

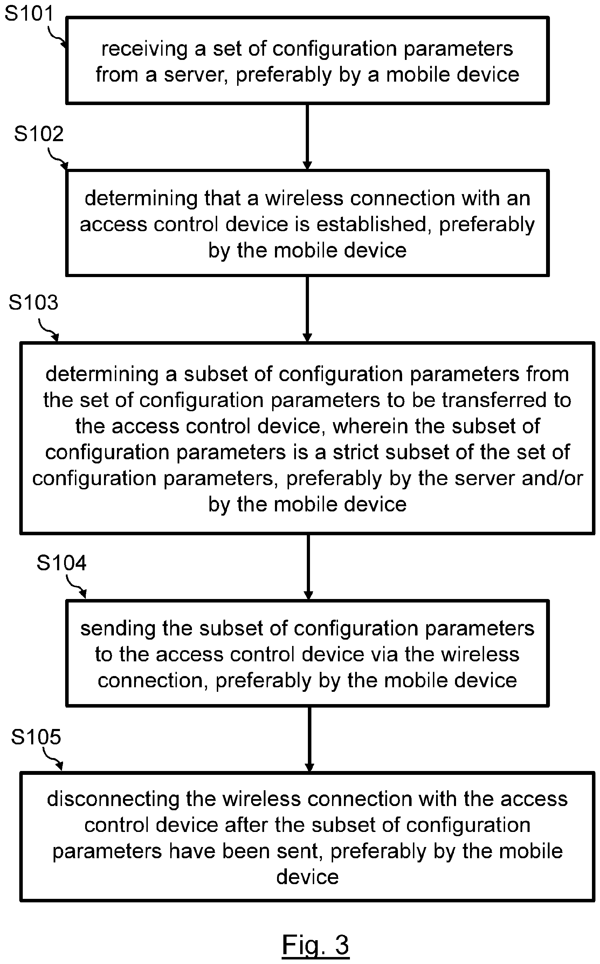

Figure 3 shows a flowchart including basic steps of the present invention. In step S101, it is performed receiving a set of configuration parameters from a server 3, preferably by a mobile device 2. In step S102, it is performed determining that a wireless connection with an access control device 1 is established, preferably by the mobile device 2. In step S103, it is performed determining a subset of configuration parameters from the set of configuration parameters to be transferred to the access control device 1, wherein the subset of configuration parameters is a strict subset of the set of configuration parameters, preferably by the server 3 and/or by the mobile device 2. In step S104, it is performed sending the subset of configuration parameters to the access control device 1 via the wireless connection, preferably by the mobile device 2. In step S105, it is performed disconnecting the wireless connection with the access control device 1 after the subset of configuration parameters have been sent, preferably by the mobile device 2.

A computer-implemented method for updating configuration parameters of an access control device 1 is provided. The configuration parameters may be whitelists and/or blacklists. The method initiates when a mobile device 2 accepts a set of configuration parameters from a server 3. The set of parameters jointly determines requisite update of present configuration parameters on the access control device 1. This process may occur in a diverse range of applications, such as updating door lock security in a smart home system, where user authorizations can be altered based on temporal requirements, individual permissions, and other variable factors.

As an extension to Claim 1, this method may include the set of configuration parameters containing a time-dependent access control profile. These profiles might involve a schedule of opening and/or closing days. For instance, the access control device 1 can be programmed to grant specific user access based on a calendar of defined operational days or hours.

The set of configuration parameters may encompass a blacklist and/or a whitelist. The blacklist could comprise prohibited credentials and/or access tokens, whereas the whitelist endorses allowed credentials and/or access tokens. This mechanism helps to further refine access permissions at the access control device 1.

In order to further enhance the operational capabilities of the access control device 1, difference data of a blacklist and/or a whitelist may be included. The difference data includes amendments to a previous blacklist and/or whitelist of the access control device 1, providing the ability to add new prohibited or allowed access credentials or remove them accordingly, enhancing the flexibility and dynamism of the system.

Alternatively or additionally, it is possible that the set of configuration parameters possess a subset of parameters that encapsulates a time-dependent access control profile and/or difference data of a blacklist or a whitelist or any combination thereof. Such functionality empowers the access control device 1 with a multitude of operational characteristics that can be regulated from the server 3 or mobile device 2.

Depending on the operational design, the task of determining the subset of configuration parameters can be allocated amongst any or all of the mobile device 2, server 3, or the access control device 1. This element of distributive processing can streamline the overall system performance.

The access control device 1 can supply a version of configuration parameters. This version assists in determining the strict subset of configuration parameters. This functionality ensures that the access control device 1 only processes the necessary updates.

As a further method processing step, the mobile device 2 may bring in a unique identification information from the access control device 1 which can optionally be sent to the server 3. Such identification procedure can serve as a means of authentication and security.

The extent of the wireless connection with the access control device 1 can be specifically constricted to transmitting only the subset of configuration parameters. This claim emphasizes on maintaining a protective measure to prevent unnecessary data transmission between the mobile device 2 and the access control device 1.

The mobile device can be a smartphone. This demonstrates the user-friendly approach and readily available technology of the invention. The smartphone can utilize its pre-existing communication capabilities to form an integral part of the system.

The method can function utilizing different wireless connection technologies such as WLAN, Zigbee, Bluetooth, UWB or their specific versions per the IEEE norms. This wide scope allows versatility in the implementation of the system across varied technological environments.

The access control device 1 can for example be an electronic reader device or an electronic lock. These examples help visualize a few practical implementations of the system in security infrastructure like a smart locking system or a card access system.

## Claims

1. A computer-implemented method for updating configuration parameters, in particular time-dependent access control profiles and/or whitelists and/or blacklists, of an access control device (1), the method comprising the steps of:
receiving (S101), by a mobile device (2), a set of configuration parameters from a server (3), the set of configuration parameters jointly establishing an update of current configuration parameters on the access control device (1);
determining (S102), by the mobile device (2), that a wireless connection with the access control device (1) is established;
determining (S103) a subset of configuration parameters from the set of configuration parameters to be transferred to the access control device (1), wherein the subset of configuration parameters is a strict subset of the set of configuration parameters;
sending (S104), by the mobile device (2), the subset of configuration parameters to the access control device (1) via the wireless connection;
disconnecting (S105), by the mobile device (2), the wireless connection with the access control device (1) after the subset of configuration parameters have been sent.

2. The method according to claim 1, wherein the set of configuration parameters includes a time-dependent access control profile, preferably including closing days and/or opening days.

3. The method according to any one of 1-2, wherein the set of configuration parameters includes a blacklist and/or a whitelist, preferably wherein the blacklist is a blacklist of prohibited credentials and/or access tokens, preferably wherein the whitelist is a whitelist of allowed credentials and/or access tokens.

4. The method according to claim 1-2, the set of configuration parameters includes difference data of a blacklist and/or difference data of a whitelist that include amendments to a previous blacklist and/or whitelist of the access control device (1),
optionally wherein the difference data of the blacklist includes
further prohibited credentials and/or access tokens to be added on the previous blacklist of the access control device (1), and/or
delete-commands causing the access control device (1) to delete credentials and/or access tokens from the previous blacklist of the access control device (1); optionally wherein the difference data of the whitelist includes
further whitelisted credentials and/or access tokens to be added on the previous whitelist of the access control device (1), and/or
delete-commands causing the access control device (1) to delete credentials and/or access tokens from the previous whitelist of the access control device (1).

5. The method according to any one of claims 2-4, wherein the set of configuration parameters includes
a subset of configuration parameters including a time-dependent access control profile, and/or
a subset of configuration parameters including a blacklist, and/or
a subset of configuration parameters including a whitelist, and/or
a subset of configuration parameters including difference data of a blacklist and/or difference data of a whitelist_{[TV1]} that include amendments to a previous blacklist and/or whitelist of the access control device (1).

6. The method according to any one of the preceding claims, wherein the step of determining the subset of configuration parameters is performed by the mobile device (2) and/or by the server (3) and/or by the access control device (1).

7. The method according to any one of the preceding claims, wherein the access control device (1) provides a version of configuration parameters based on which determining the subset of configuration parameters is performed.

8. The method according to any one of the preceding claims, the method further comprising:
receiving, by the mobile device (2), a unique identification information from the access control device (1);
optionally, sending, by the mobile device (2), the unique identification information to the server (3).

9. The method according to any one of the preceding claims, wherein the wireless connection with the access control device (1) is limited to sending only the subset of configuration parameters.

10. The method according to any one of the preceding claims, wherein the mobile device (2) is a smartphone.

11. The method according to any one of the preceding claims, wherein the wireless connection is based on one or more of the following: WLAN, in particular IEEE 802.11; Zigbee, in particular IEEE 802.15.4; Bluetooth, in particular Bluetooth Low Energy, in particular IEEE 802.15.1; UWB, in particular IEEE 802.15.4a and/or IEEE 802.15.4z.

12. The method according to any one of the preceding claims, wherein the access control device (1) is an electronic reader device and/or an electronic lock.

13. A data processing apparatus, in particular a mobile device (2), more particular a smartphone, being configured to perform a method according to one of claims 1 to 12.

14. A computer program comprising computer program code which, when run on a data processing apparatus according to claim 13, causes the causes the data processing apparatus to perform a method according to one of claims 1 to 12.
